# EUROPEAN PATENT APPLICATION

(11) **EP 1 515 114 A2**
(43) Date of publication of application: **16.03.2005**
(21) Application number: 04396062.4
(22) Date of filing: 10.09.2004
(51) Int. Cl.: G01B 11/04, G01B 11/10, B65H 7/02

(54) **Apparatus for measuring the volume of a timber load**

(30) Priority: 12.09.2003 FI 20030331 U
(71) Applicant: PC-Koneistus Oy, 53300 Lappeenranta (FI)
(72) Inventor: Salmela, Veli-Matti, 53300 Lapeenranta (FI); Varis, Sauli, 53300 Lapeenranta (FI)
(74) Representative: Tanskanen, Jarmo Tapio

(57) **Abstract**

The invention relates to a sampling measuring device for verifying the measurement of the volume of the individual timber loads delivered to the woodworking industry. The sampling measuring device comprises: a dosing apparatus (1) for feeding the logs (2) to be measured one by one into the measurement phase; a measurement unit (3) for detecting the length and profile of the log and for storing the data; a feeding table (4) for feeding an individual log through the measurement unit; as well as a reception space (5) for receiving the logs that have been measured one by one and for collecting them before conveying them further on.

## Description

### FIELD OF THE INVENTION

The present invention relates to a sampling measuring device as defined in the preamble of claim 1 for verifying the measurements of timber loads of industry.

### BACKGROUND OF THE INVENTION

Although the timber to be delivered to the industry has already been measured in the forest in conjunction with the felling, i.e. the body lengths and thicknesses and the solid cubic amounts calculated based on them are known, all the loads ending up in a woodworking factory are re-measured prior to unloading the loads. As the measurement is made for entire loads either manually or mechanically, the outcome always is some kind of approximate estimate of the real amount of timber. The estimate is affected by facts such as the average length of the trunks, compactness of the load, straightness of the trunks, purity degree of the load, i.e. whether there is a lot of snow and ice involved, etc.

In order to be able to give a sufficiently accurate estimate, one must make sampling measurements every now and then, i.e. one must accurately measure some load in order to be able to perceive the error between the estimate and the actual result. At present, the sampling measurements are made completely manually, i.e. the entire load is spread side by side into a sufficiently big field, where the length and effective diameter or the diameters of both ends are measured for each log specifically. Based on this information, it is possible to calculate the amount of timber of the entire load.

The biggest problem with the prior art is the slowness of the measurement, the huge amount of work and thus the cost. As the measurement requires much space and is expensive, there are not many measurements that can be made, thus increasing the risk of measurement errors. Hence, it is in the interests of both the timber seller and the buyer that the measurements are as accurate and rightful as possible.

### OBJECTIVE OF THE INVENTION

The objective of the invention is to eliminate the drawbacks referred to above. One specific objective of the invention is to disclose a new type of sampling measuring device enabling fast and accurate verifying measurement of timber loads to be received in a small working area without manual and slow processing phases.

### SUMMARY OF THE INVENTION

The sampling measuring device in accordance with the invention is characterised by what has been presented in claim 1.

The sampling measuring device in accordance with the invention is designed to be used in the verification of the measurement of the volume of the timber loads to be delivered to the woodworking industry using verifying measurements the size of an individual timber load. The sampling measuring device in accordance with the invention comprises a dosing apparatus for feeding the logs to be measured one at a time into the measurement phase, as well as a measurement unit for detecting the timber volume and storing the data. In addition, the sampling measuring device comprises a feeding table for feeding an individual log through the measurement unit, as well as a reception space for receiving and collecting the logs measured one at a time prior to conveying them further.

In the invention, as the dosing apparatus it is possible to use conveyors or similar prior-art devices that enable one to feed the logs one at a time into the measurement unit. Advantageously, a stepped log lift is used as the dosing apparatus. It is also possible to use chain-like log lift structures.

Advantageously, as the feeding table, a chain conveyor or a belt conveyor is used on top of which the logs to be measured are conveyed transversely or in the longitudinal direction one at a time and at a distance from one another through the measurement unit.

Advantageously, the sampling measuring device comprises a weighing machine which enables one to register the weight of the logs to be measured. When the dimensions/volume and weight of the logs are known, it is possible to judge from them also other properties of the logs, such as density and humidity. The weighting machine can be arranged in conjunction with the feeding table, whereby each log can be weighted separately in conjunction with the rest of the measurement. On the other hand, the weighting machine can be disposed in conjunction with the reception space so that logs that have been measured in terms of their dimensions are weighted together in suitable bundles. Also the feeding space, i.e. the space into which the logs to be measured are conveyed to be included in the measurement, can function as the measurement point.

Advantageously, the measurement unit comprises a measurement beam longer than the logs to be measured and provided with suitable storing equipment for measuring the profile, i.e. the volume, length and the shape and diameter of the casing of the log that is conveyed transversely on the feeding table under the measurement beam. Depending on the technique to be used, it is also possible in this conjunction to perform more accurate timber grading, e.g. for different wood species, as well as verifying the condition of timber. These measures can be based e.g. on a suitable image processing technique, or can be based on a user's visual perceptions, or on manual storage of the information on a device. An automatic grading station or one operated by a user can be disposed in conjunction with the measurement unit, or suitably before or after it in the direction of motion of the log to be processed. In grading, it is possible to perceive in the log properties to be perceived mainly visually, such as e.g. rotting, a butt log, knottiness, branchiness, the wood species, the quality and amount of the bark, snowiness, iciness.

In another embodiment, the measurement unit comprises a measurement arc or measurement frame provided with suitable storing equipment, through which the logs to be measured are conveyed in the longitudinal direction one at a time when measuring their length, diameter and the profile of the casing.

The sampling measuring device in accordance with the invention has several advantages over prior art. The apparatus is very easy and fast to use. The logs to be measured need not be manually processed in any manner, and the logs can be made to proceed one at a time through the apparatus so fast that it is possible to make more sampling measurements than at present, at lower costs and so that the measurements will take less space. This enables one to considerably add to the amount, accuracy and dependability of all timber measurements.

### LIST OF FIGURES

In the following section, the invention will be described in detail with reference to the accompanying drawings, wherein
Fig. 1 schematically represents one sampling measuring device in accordance with the invention as seen from the side;
Fig. 2 schematically represents a second sampling measuring device in accordance with the invention as seen from the side; and
Fig. 3 represents a diagram illustrating a third embodiment of the invention.

### DETAILED DESCRIPTION OF THE INVENTION

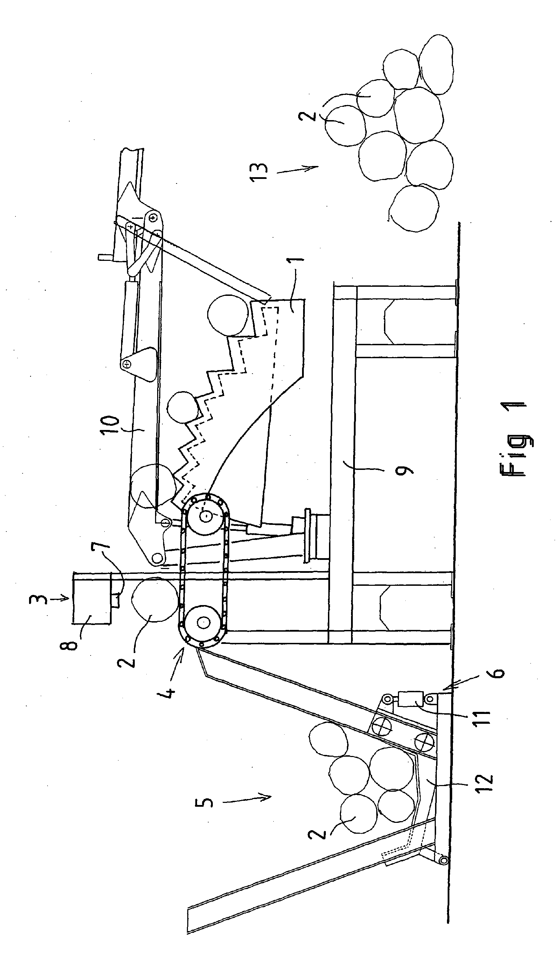

One embodiment of the invention as shown in Fig. 1 comprises a frame 9 of the sampling measuring device with its necessary power units and power transmission mechanisms, which are not shown in the figure. Mounted on the frame 9 is a stepped log lift 1 known per se, which is arranged to hoist and convey the logs 2 one by one towards a feeding table 4, which consists of a horizontal chain conveyor. In the vicinity of the stepped log lift there is also a hoisting apparatus 10 known per se, a group of booms, a grab loader or the like for hoisting and directing the logs from the ground or directly from the load, or from a suitable feeding space to the stepped log lift.

On top of the chain conveyor of the feeding table 4 there is a measurement unit 3, which consists of a measurement beam 8, having substantially the length of the logs to be measured, which measurement beam 8 has a suitable number of data entry devices 7 for measuring the log. As the storage and measurement media it is possible to use means based on different techniques and known separately per se, such as video cameras, photocells or other identifying devices and image processing technique.

After the chain conveyor 4 there is a reception space, into which the measured logs are dropped. Arranged in the reception space is a weighting machine 6, i.e. in this embodiment grabs 12 to be hoisted using a power unit 11, enabling one to measure the weight of the timber load that hinges on the grabs.

The sampling measuring device in accordance with the invention as shown in the drawing is used as follows. The logs 2 disposed on the ground or in the feeding space or in a lorry are hoisted using a hoisting apparatus 10 one or more at a time on top of a stepped log lift 1. While operating, the stepped log lift separates the logs from one another and conveys them one by one on top of the chain conveyor of the feeding table 4. The chain conveyor conveys the logs 2 in their transverse direction in the horizontal direction further on at a relatively gentle speed from below the measurement beam 8 of the measurement unit 3. While proceeding from below the measurement beam or in its vicinity, the log, i.e. one or more of its properties are examined: its dimensions, length and diameters at different points, warpedness, the quality of the surface, the quality of the ends, undersizeness, oversizeness, snowiness or iciness, i.e. snow reduction, bark addition, rotting, a butt log, knottiness, branchiness and the wood species. The measurements and observations are recorded using techniques known per se for the calculation of the volume, as well as for the other possible sorting, grading and processing.

After the examination, the logs are dropped into the reception space 5, in which they are also weighted using the weighting machine. After this, the logs can be conveyed away from the reception space using a suitable grab loader or the like. The weighing machine can, however, be arranged already in conjunction with the chain conveyor, whereby in conjunction with the measurement, each log is weighed separately. The filing of the measurement results and of the storage of the log's proceeding, as well as the possible data transfer to the client's database are performed by applications known per se.

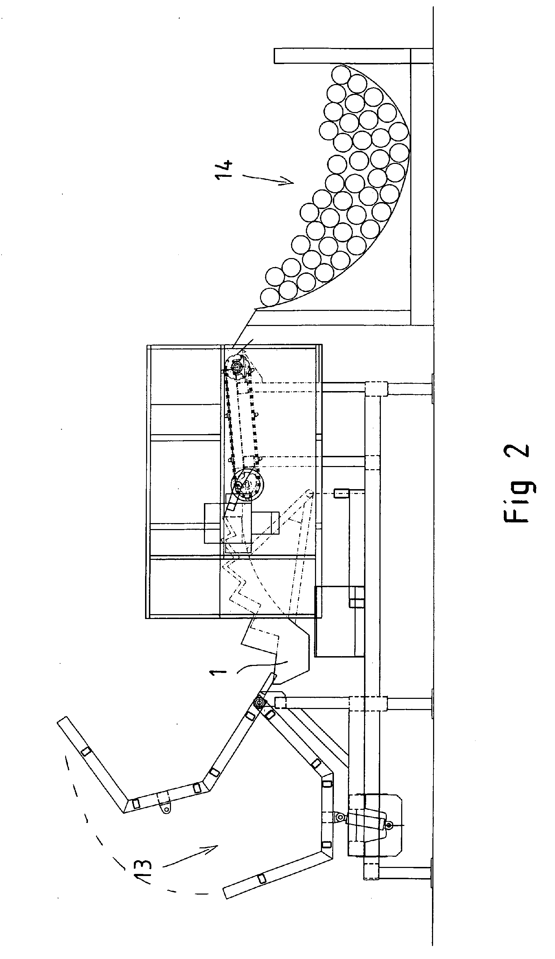

The second embodiment shown in Fig. 2 corresponds, for the most part, to the embodiment shown in Fig. 1; and in the following, just the structural differences between the embodiments are described. In the embodiment as shown in Fig. 2, the feeding space 13 itself has been made a space that feeds, i.e. dumps to the log lift 1, whereby a group of booms 10 is necessarily not needed in conjunction with the apparatus. In that case, the feeding space also forms a weighing space, i.e. a space where the timber to be measured is weighed before the measurement. The reception space 14 disposed after the measurement can in that case be just a simple supporting frame or the like from which a bundle of timber can be taken and carried further using e.g. a worklift truck or a grab loader.

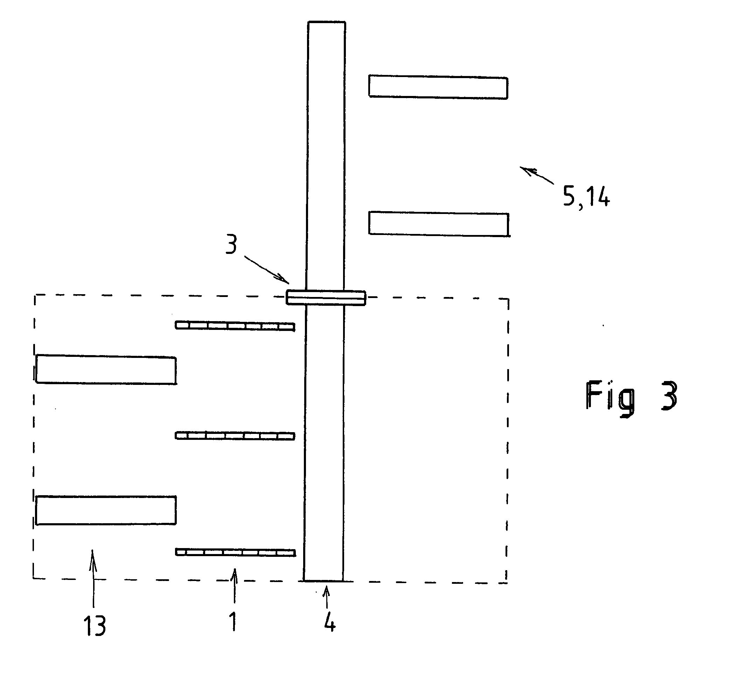

The embodiment as shown in Fig. 3 illustrates a solution in which the logs are measured in the longitudinal direction through the measurement arc that functions as the measurement unit 3. From this can be seen that the feeding space 13 and the log lift 1 can be of the same type as in the embodiments as shown in Figs. 1 and 2, but as the feeding table 4, one must use a conveyor that is twice as long as the logs to be measured, in the centre of which conveyor there is a measurement frame 3 that measures the logs. The reception space 5, 14, in turn, can be of the same type as in the embodiments shown in Figs. 1 and 2.

The advantage of the embodiment as shown in Fig. 3 is the use of a conventional and relatively inexpensive measurement technique, but the disadvantage is the big need for space due to the longitudinal measurement as compared to the embodiments as shown in Figs. 1 and 2, the need for space of which is depicted with a broken line in Fig. 3.

The invention is not limited solely to the examples presented above, instead many variations are possible within the scope of the inventive idea defined by the claims.

## Claims

1. A sampling measuring device for verifying the measurement of the volume of the timber loads to be delivered to woodworking industry using verifying measurements the size of an individual timber load, **characterised in that** the sampling measuring device comprises: a dosing apparatus (1) for feeding the logs (2) to be measured one by one into the measurement phase; a measurement unit (3) for detecting the length and profile of the log and for storing the data; a feeding table (4) for feeding an individual log through the measurement unit; as well as a reception space (5) for receiving the logs that have been measured one by one and for collecting them before conveying them further on.

2. The sampling measuring device as defined in claim 1, **characterised in that** the dosing apparatus (1) is a stepped log lift.

3. The sampling measuring device as defined in claim 1, **characterised in that** the feeding table comprises means for feeding an individual log crosswise through the measurement unit.

4. The sampling measuring device as defined in claim 1, **characterised in that** the feeding table comprises means for feeding an individual log in the longitudinal direction through the measurement unit.

5. The sampling measuring device as defined in claim 1, **characterised in that** the feeding table (4) is a chain conveyor.

6. The sampling measuring device as defined in claim 1, **characterised in that** the sampling measuring device comprises a weighing machine (6) for weighing the logs to be measured in conjunction with the feeding space, feeding table or reception space (5) one by one or in bundles.

7. The sampling measuring device as defined in claim 1, **characterised in that** the measurement unit (3) comprises a measurement beam (8) provided with storage equipment (7) for measuring a log (2) that is conveyed transversely from below it on the feeding table.

8. The sampling measuring device as defined in claim 1, **characterised in that** the measurement unit (3) comprises a measurement arc or a measurement frame provided with storage equipment (7) for measuring a log (2) that proceeds in the longitudinal direction through the measurement arc or frame.

9. The sampling measuring device as defined in claim 1, **characterised in that** the sampling measuring device comprises a grading station for grading the timber substantially in conjunction with the measurement.
